Europäisches Patentamt

(19) European Patent Office

Office européen des brevets

(11) Numéro de publication : **0 287 483 B1**

# (12) FASCICULE DE BREVET EUROPEEN

(45) Date de publication du fascicule du brevet :
**14.08.91 Bulletin 91/33**

(51) Int. Cl.$^5$ : **B62B 3/06**

(21) Numéro de dépôt : **88420118.7**

(22) Date de dépôt : **12.04.88**

(54) **Dispositif d'assistance au démarrage pour transpalette manuel.**

(30) Priorité : **15.04.87 FR 8705784**

(43) Date de publication de la demande :
**19.10.88 Bulletin 88/42**

(45) Mention de la délivrance du brevet :
**14.08.91 Bulletin 91/33**

(84) Etats contractants désignés :
**AT BE CH DE ES GB GR IT LI LU NL SE**

(56) Documents cités :
**DE-A- 3 522 866**
**GB-A- 814 917**
**GB-A- 1 040 073**
**US-A- 3 937 479**

(73) Titulaire : **Ballereau, Jean Jacques**
**1, Les Jardins de Saint-Jean**
**F-34430 Saint Jean de Vedas (FR)**

(72) Inventeur : **Ballereau, Jean Jacques**
**1, Les Jardins de Saint-Jean**
**F-34430 Saint Jean de Vedas (FR)**

(74) Mandataire : **Bratel, Gérard et al**
**Cabinet GERMAIN & MAUREAU B.P. 3011**
**F-69392 Lyon Cédex 03 (FR)**

## Description

La présente invention concerne un appareil de manutention de charges appelé communément "transpalette manuel", et elle se rapporte, plus particulièrement, à un tel transpalette manuel qui comporte un dispositif d'assistance au démarrage, le dispositif proposé apportant une amélioration notable dans l'utilisation de ce genre d'appareil de manutention.

Les transpalettes sont couramment utilisés pour prélever et déplacer une charge, et plus spécialement une charge posée sur une palette. Un transpalette assure : la levée de la charge à une faible hauteur au-dessus du sol, le déplacement horizontal de la charge ou "translation", par roulage sur le sol, et la pose de la charge. Dans le cas d'un transpalette "manuel", toutes ces fonctions sont assurées à partir de la seule force musculaire de l'opérateur.

A cet effet, tout transpalette manuel actuel comporte essentiellement, selon la conception de base indiquée par exemple par le document GB-A-814917, un châssis formé de deux longerons parallèles, munis de galets vers l'une de leurs extrémités et reliés l'un à l'autre, à leurs extrémités éloignées des galets, par un tablier transversal sensiblement vertical, tourné vers le haut et se terminant, à son sommet, par une chape d'axe vertical. Le tablier est muni, à sa base, d'un axe horizontal autour duquel pivotent deux leviers. L'un des leviers possède un bras tourné vers l'arrière et relié par une tringle aux galets du longeron situé du côté gauche. Le second levier possède de manière symétrique, un bras tourné vers l'arrière et relié par une tringle aux galets du longeron situé du côté droit. Les autres bras des deux leviers, dirigés vers l'avant, sont raccordés à un même palonnier situé juste au-dessous du centre de la chape, et pourvu d'une ouverture centrale.

Un bloc hydraulique disposé sous la chape, avec pistons émetteur et récepteur, constitue le système de commande de levée. La partie inférieure du bloc hydraulique traverse l'ouverture centrale du palonnier, et sa partie supérieure plus large, située entre la chape et le palonnier, prend appui sur ce palonnier. La tête du piston récepteur est logée sous la chape.

Un train de roulement avant, composé d'un axe et de deux roues tournant librement sur les extrémités de l'axe, est prévu au-dessous du palonnier. Ce train avant est fixé à la base du bloc hydraulique.

Un timon de manoeuvre sert à diriger et à déplacer le transpalette avec sa charge, ce timon tournant avec les roues de train de roulement avant autour de l'axe vertical de la chape. Dans la conception la plus ancienne, illustrée par le document GB-A-814917 précité, le timon est lié par un axe d'articulation horizontal au support des roues, sous le bloc hydraulique, et il ne sert pas à la commande de la levée, celle-ci étant commandée par un autre moyen tel qu'une pédale.

Dans la conception actuelle du transpalette, telle qu'illustrée par le document GB-A-1040073, le timon de manoeuvre est relié par l'intermédiaire d'un axe d'articulation au bloc hydraulique ; ce timon est muni, à proximité de son axe d'articulation au bloc hydraulique, d'une came ou d'un galet prévu pour faire pression sur le piston émetteur lorsque le timon est abaissé. Un ressort de rappel ramène automatiquement le timon en position verticale.

Pour obtenir la levée de la charge, l'opérateur prend en main le timon maintenu en position verticale par le ressort de rappel, puis il l'abaisse, le laisse remonter, et répète plusieurs fois la même manoeuvre. A chaque mouvement d'abaissement du timon, la came de ce dernier actionne le piston émetteur, pour déplacer un fluide hydraulique qui vient pousser le piston récepteur. En agissant sur la chape, le piston récepteur soulève la partie avant du châssis. Simultanément, le bloc hydraulique et le palonnier s'abaissant par rapport à la chape, les deux leviers pivotent et ils commandent, par l'intermédiaire des tringles respectives, un mouvement de sortie des galets qui soulève la partie arrière du châssis, assurant ainsi la levée des deux longerons tout en les maintenant parallèles au sol.

Sur certains appareils existants, chaque opération de levée doit être précédée par une sélection de fonction faite au moyen d'une manette placée en haut du timon, ou d'une pédale placée sur la partie supérieure du bloc hydraulique. Sur d'autres transpalettes, la levée s'obtient directement par la manoeuvre répétée du timon de haut en bas ; lorsque le piston récepteur arrive en position haute, il libère automatiquement le timon pour permettre l'opération de translation, et seule la descente de la charge pour sa pose nécessite l'action préalable sur une manette.

Après levée de la charge, le timon étant dans tous les cas rendu libre, l'opérateur procède au déplacement du transpalette et de la charge, en se servant du timon comme point d'appui permettant de tirer ou de pousser le transpalette, reposant et roulant sur le sol par les galets des longerons et par les roues du train avant :

— pour faire reculer le transpalette, le timon est laissé en butée dans sa position verticale, et l'opérateur imprime une poussée horizontale sur la partie supérieure du timon ;

— pour faire avancer le transpalette, il faut au contraire amener le timon de sa position verticale à une position oblique, déterminée par la taille de l'opérateur et par l'attitude qu'il adopte en fonction de l'effort à déployer, après quoi il faut tirer sur le timon.

L'effort à fournir pour actionner le système hydraulique de levée est acceptable ; par contre, la mise en mouvement par la seule force musculaire de l'opérateur du transpalette portant une charge pose souvent un problème, même pour un homme très robuste. En effet, le démarrage du transpalette porteur d'une charge est fréquemment rendu très pénible, voire impossible, par des circonstances telle que l'inclinaison du sol, le mauvais état du sol (notamment un sol irrégulier ou glissant), la lourdeur de la charge représentant une inertie à vaincre, éventuellement le mauvais état des roues du transpalette, ces divers facteurs pouvant être conjugués ou non. Dans un tel cas, la seule issue actuellement offerte est de faire appel à une deuxième personne, pour assister l'opérateur éprouvant des difficultés.

Une autre cause de difficulté est l'exiguïté du lieu de manoeuvre du transpalette, qui peut empêcher l'opérateur de déployer le timon et de se placer dans une position de traction efficace. Ce genre de difficulté se rencontre, en particulier, dans les mouvements du transpalette sur la plateforme d'un véhicule, lors des opérations de chargement ou de déchargement de celui-ci.

On connaît par ailleurs, par le document US-A-3937479, un dispositif d'assistance au démarrage pour des chariots ou véhicules similaires lourds, dans lequel un timon de manoeuvre est prévu pour permettre l'entraînement en rotation d'une roue dirigeable, afin de faciliter le déplacement du chariot. Le timon est ici monté pivotant autour de l'axe de rotation horizontal de la roue, et il peut être directement accouplé à cette roue par un mécanisme à rochet.

Toutefois, ce document US-A-3937479 n'envisage pas l'utilisation du dispositif dans le cas d'un transpalette manuel, et la solution enseignée par ce document n'est pas applicable à un transpalette manuel de la conception actuelle (selon document GB-A-1040073 précité).

En effet, considérant que selon cette conception le timon est articulé suivant un axe horizontal situé à hauteur du bloc hydraulique pour pouvoir commander aussi la levée, le palonnier constitue un obstacle pour une transmission de mouvement et d'effort entre le timon et les roues. Une transmission directe telle qu'enseignée par le document US-A-3937479 est ici manifestement inadaptée, et il existe là un problème réel qui, bien qu'il se pose déjà depuis de longues années, n'a encore reçu aucune solution.

l'invention solutionne ce problème, en fournissant pour un transpalette manuel de conception actuelle un équipement qui, sans utiliser de source d'énergie autre que la force humaine appliquée sur le timon, permet d'augmenter l'efficacité de l'opérateur au moment du démarrage du transpalette et dans tous les cas de difficulté pour le déplacement du transpalette porteur d'une charge.

A cet effet, l'invention a pour objet un transpalette manuel selon le document GB-A-1040073, qui comporte un dispositif d'assistance au démarrage, le dispositif d'assistance comprenant essentiellement, entre le timon et l'une au moins des deux roues du train de roulement avant du transpalette, des moyens de liaison aptes à être mis en service sélectivement, pour transmettre à l'une au moins des roues, en traversant le palonnier, un effort exercé manuellement sur le timon et déplaçant ce dernier, en convertissant cet effort en un couple d'entraînement en rotation de l'une au moins de ces roues autour de son axe.

Ainsi le timon, utilisé comme un levier, assure une fonction supplémentaire qui est de transmettre aux roues du train avant du transpalette un couple, lequel s'ajoute à l'effort direct de traction ou de poussée par le timon, et permet d'augmenter de façon importante l'effort total déployé pour déplacer le transpalette, notamment lors d'un démarrage mais aussi dans toute autre situation de difficulté. Ainsi, l'opérateur peut se dispenser totalement de l'aide d'une tierce personne. Le poids de la charge portée par le transpalette contribuant à la bonne adhérence des roues sur le sol, le couple transmis à ces roues par le dispositif objet de l'invention peut développer son plein effet. De plus, l'utilisation pratique du dispositif d'assistance du démarrage selon l'invention est très commode et se fait par un geste "naturel", l'action manuelle exercée par l'opérateur sur le timon pour actionner ce dispositif étant de même nature et de même sens que l'action devant être, habituellement, exercée sur le timon pour faire avancer ou reculer le transpalette.

Divers modes de réalisation de l'invention sont envisageables selon les moyens de liaison utilisés pour transmettre un effort et un mouvement depuis le timon jusqu'à l'une au moins des roues du train avant en traversant le palonnier.

Dans une première forme générale de réalisation de l'invention, ces moyens de liaison sont mécaniques, et ils comprennent au moins une chaîne de transmission ou similaire dont une partie est liée au timon et dont une autre partie passe sur un pignon coaxial aux deux roues du train de roulement avant, des moyens étant prévus pour solidariser temporairement en rotation le pignon avec l'une au moins des roues du train avant.

Selon un mode de réalisation particulier, la chaîne de transmission possède une extrémité fixée à un bras qui prolonge le timon au-delà de son axe d'articulation sur le bloc hydraulique, tandis que l'autre extrémité de la chaîne est enroulée et fixée sur le pignon, apte à être solidarisé temporairement en rotation avec l'une au moins des roues du train avant. Ainsi, le pivotement du timon dans un sens déterminé provoque une traction sur la chaîne, qui fait tourner le pignon dans le sens correspondant ; si le pignon est solidarisé en rotation avec au moins une roue, cette roue est entraînée en rotation dans le même sens que le pignon. Les moyens prévus pour solidariser temporairement en rotation le pignon et l'une au moins des roues du train avant comprennent, par exemple, un montage coulissant du pignon sur l'axe de ces roues, et des éléments complémentaires formés sur le pignon et sur la roue voisine, de telle sorte qu'un déplacement axial du pignon provoque l'entrée en prise desdits éléments complémentaires. Un tel mécanisme de "crabotage" peut être commandé à distance, au moyen d'une manette placée de préférence en haut du timon, et par l'intermédiaire d'un câble ou d'une tige de transmission.

Le précédent mode de réalisation est très simple, mais il permet d'entraîner les roues du train avant dans un seul sens de rotation, correspondant de préférence au déplacement du transpalette vers l'avant.

Selon un second mode de réalisation, toujours mécanique et à chaîne mais autorisant un entraînement dans les deux sens de rotation, la ou chaque chaîne de transmission est une chaîne sans fin passant sur un premier pignon monté autour de l'axe d'articulation du timon sur le bloc hydraulique et passant sur un deuxième pignon coaxial aux roues du train avant. On comprend facilement qu'une telle liaison entre le timon et les roues donne la possibilité d'agir dans le sens de l'avance ou du recul du transpalette. La sélection d'entraînement pour la marche avant et la marche arrière peut se faire sur une même roue par une seule commande de "crabotage", par exemple à partir d'une seule manette, comme dans le précédent mode de réalisation. Il est aussi possible d'envisager deux chaînes sans fin, disposées de part et d'autre du bloc hydraulique et associées respectivement aux deux roues du train avant, l'une des chaînes étant affectée à l'entraînement d'une roue dans le sens correspondant à la marche avant, tandis que l'autre chaîne est affectée à l'entraînement d'une roue dans le sens correspondant à la marche arrière, auquel cas la sélection d'entraînement se fait sur l'une ou l'autre des deux roues selon le sens de marche désiré.

La chaîne ou chaque chaîne de transmission passe, avantageusement, au travers d'au moins une lumière ménagée dans le palonnier, sur le côté du bloc hydraulique, pour ne pas entraver la rotation de ce bloc hydraulique et du train avant. Le câble ou la tige de commande de "crabotage" traversent le palonnier de la même manière. La mise en oeuvre de l'invention peut, dans cette forme de réalisation mécanique, exiger une certaine augmentation des dimensions habituelles du palonnier, afin de permettre le passage de la chaîne ou des chaînes.

Selon une autre forme de réalisation mécanique, autorisant également un entraînement dans les deux sens de rotation, les moyens de liaison utilisés pour transmettre un effort et un mouvement depuis le timon jusqu'à l'une au moins des roues du train de roulement avant comprennent un ensemble de pignons et d'arbres de transmission, avec un premier pignon porté par l'axe d'articulation du timon et un dernier pignon coaxial aux roues du train avant et solidaire en rotation de l'une au moins de ces roues, des moyens d'accouplement étant prévus pour solidariser temporairement en rotation deux arbres de transmission, ou un arbre et un pignon. On dispose ainsi d'une transmission par engrenages qui, lorsque l'accouplement est réalisé, permet de faire tourner les roues dès qu'on actionne le timon, le sens de pivotement du timon déterminant le sens de rotation des roues, correspondant à la marche avant ou à la marche arrière. Cette forme de réalisation est très simple, et elle nécessite seulement la traversée du palonnier par un arbre de transmission.

On peut éviter toute adaptation du palonnier, dans une autre forme de réalisation de l'invention, dans laquelle les moyens de liaison, utilisés pour transmettre un effort et un mouvement depuis le timon jusqu'à l'une au moins des roues du train de roulement avant sont des moyens hydrauliques ; le choix de tels moyens, réalisés suivant le principe des transmissions hydrauliques, est avantageux non seulement parce qu'il évite de modifier le palonnier, mais aussi parce qu'on dispose déjà d'un fluide hydraulique approprié et de moyens mettant ce fluide en pression, grâce au bloc hydraulique constituant le système de commande de levée.

Plus particulièrement, dans ce dernier cas, l'axe portant les deux roues du train avant est conformé, dans sa partie centrale, en turbine hydraulique réceptrice, tandis que le corps du bloc hydraulique comporte des canaux aboutissant à la turbine et repartant de celle-ci, des robinets de distribution du fluide hydraulique, étant prévus sur ces canaux. Les robinets permettent de mettre en service l'entraînement hydraulique des roues, en sélectionnant le sens de rotation ; s'ils sont à action progressive, ces robinets permettent en outre une commande de variation des débits de fluide dans les canaux, pour l'obtention d'un ralentissement progressif puis d'une immobilisation complète du transpalette, par fermeture totale desdits robinets. Ainsi, le dispositif selon l'invention peut assurer en outre la retenue du transpalette, par exemple sur un sol incliné, et il constitue un facteur de sécurité.

Comme les modes de réalisation "mécaniques", la forme d'exécution "hydraulique" implique une solidarisation temporaire en rotation des roues avec leurs moyens d'entraînement. Cette fonction est ici également réalisable par des moyens hydrauliques, notamment en prévoyant, dans le corps du bloc hydraulique, un canal supplémentaire aboutissant en regard d'une gorge annulaire de l'axe portant les deux roues du train avant, cet axe comportant lui-même des canaux partant de ladite gorge et amenant le fluide hydraulique derrière deux petits pistons qui déplacent axialement des crabots pour les amener en prise respectivement avec les deux roues.

De toute façon, l'invention sera mieux comprise à l'aide de la description qui suit, en référence au dessin schématique annexé représentant, à titre d'exemples non limitatifs, quelques formes d'exécution de ce transpalette manuel avec dispositif d'assistance au démarrage :

Figure 1 est une vue d'ensemble, en perspective, d'un transpalette manuel ;

Figure 2 est une vue de côté de la partie avant d'un transpalette manuel, équipé d'un dispositif d'assistance au démarrage avec transmission mécanique, selon un premier mode de réalisation ;

Figure 3 est une vue en perspective d'un transpalette manuel (le timon étant indiqué très partiellement), équipé d'un dispositif d'assistance au démarrage avec transmission mécanique, selon un second mode de réalisation ;

Figure 4 est une vue très schématique d'un dispositif d'assistance au démarrage avec transmission mécanique, selon un troisième mode de réalisation ;

Figure 5 est une vue en coupe verticale passant par l'axe des roues du train avant, et se rapportant à un transpalette manuel équipé d'un dispositif d'assistance au démarrage avec transmission hydraulique ;

Figure 6 est une vue partielle en coupe de ce dernier dispositif, suivant VI-VI de figure 5.

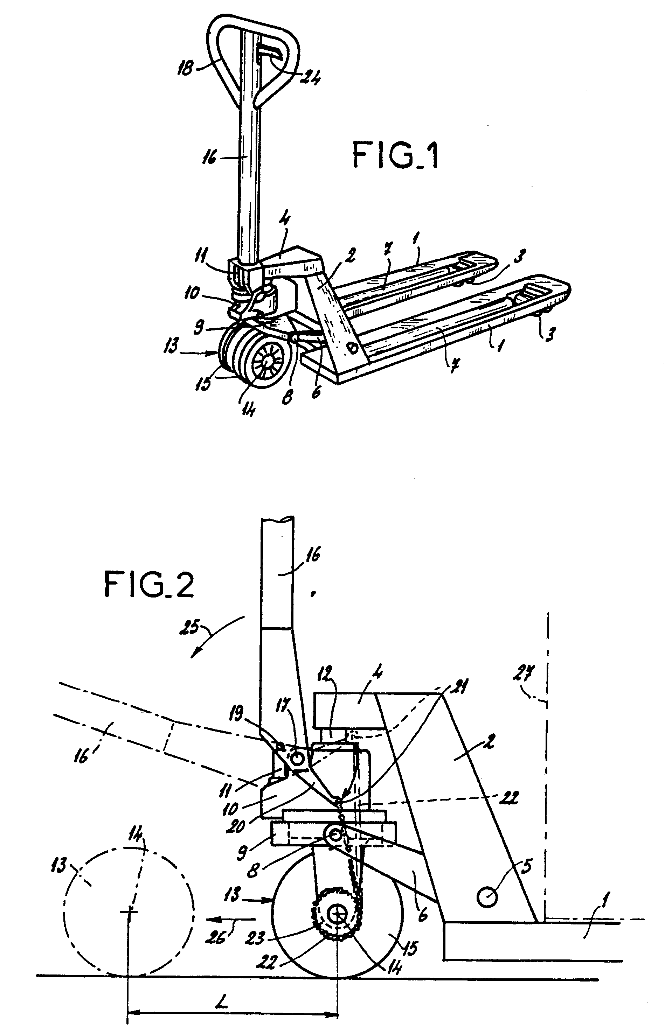

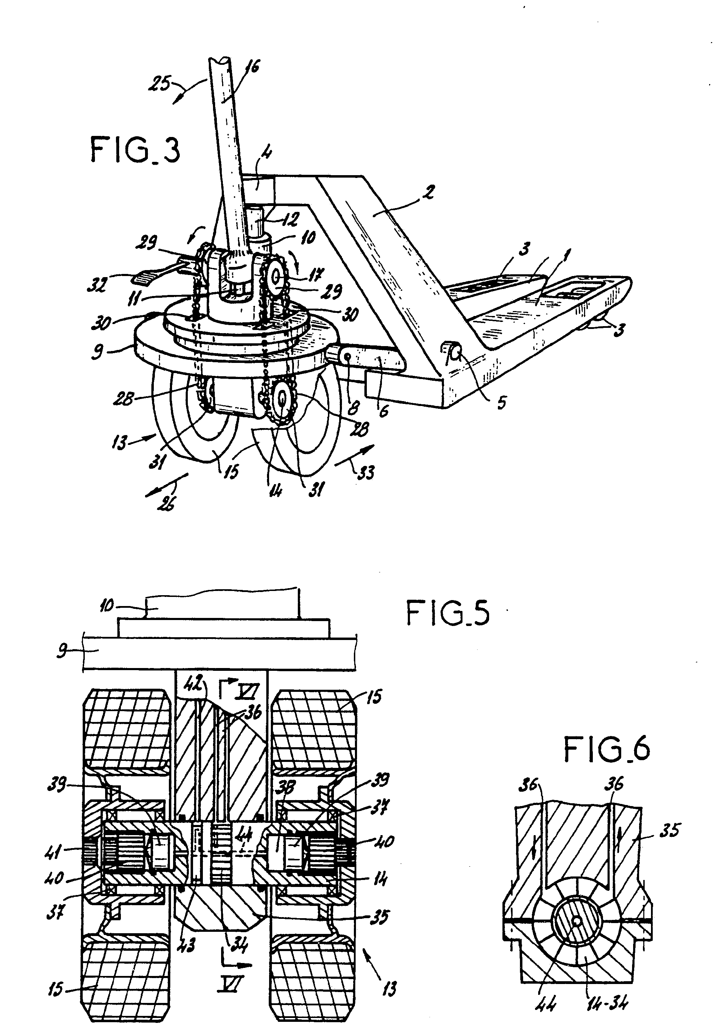

Le transpalette manuel représenté sur la figure 1, et visible aussi partiellement aux figures 2 et 3, possède de façon connue un châssis composé de deux longerons 1 parallèles, et d'un tablier transversal 2. Les deux longerons 1 sont munis, vers leurs extrémités libres, définissant le côté arrière du transpalette, de paires de galets 3 pour le roulement de l'appareil sur le sol. Le tablier 2 relie les deux longerons l'un à l'autre, à leurs extrémités éloignées des galets 3. Ce tablier 2, tourné vers le haut, se termine à son sommet par une chape 4 d'axe vertical.

Vers sa partie inférieure, le tablier 2 est pourvu d'un axe horizontal 5, autour duquel sont montés pivotants deux leviers 6 parallèles entre eux. Chaque levier 6 possède un bras tourné vers l'arrière et relié, par une tringle 7, à la paire de galets 3 de l'un des longerons 1. Les autres bras des deux leviers 6, tournés vers l'avant, sont articulés sur des tourillons 8 respectifs situés de part et d'autre d'un même palonnier 9 en forme de couronne, disposé au-dessous de la chape 4 et centré sur l'axe vertical de celle-ci.

Un bloc hydraulique 10 est monté aussi sous la chape 4, la partie inférieure de ce bloc hydraulique 10 traversant l'ouverture centrale du palonnier 9, tandis que sa partie supérieure, plus large, prend appui sur le palonnier 10. Le bloc hydraulique 10 comprend un piston émetteur 11 et un piston récepteur 12, ce dernier ayant sa tête logée sous la chape 4.

A la base du bloc hydraulique 10 est fixé un train de roulement avant 13, comprenant un axe 14 et deux roues 15 à bandages en caoutchouc, montés sur l'axe 14.

Un timon de manoeuvre 16 est relié à la partie supérieure du bloc hydraulique 10, par l'intermédiaire d'un axe d'articulation horizontal 17. L'extrémité du timon 16 éloignée de son axe d'articulation 17 porte une sorte de guidon 18. Le timon 16 est encore muni, à proximité de son axe d'articulation 17, d'une came ou d'un galet 19 prévu pour actionner le piston émetteur 11.

Le timon de manoeuvre 16 permet de tirer ou de pousser le transpalette roulant sur le sol par les galets 3 et par les roues 15 du train avant 13, ce timon 16 permettant en outre de diriger l'appareil puisque l'ensemble constitué par ledit timon 16, par le bloc hydraulique 10 et par le train avant 13 peut pivoter autour de l'axe vertical de la chape 4. En outre, un mouvement de pivotement du timon 16 autour de son axe d'articulation 17 permet de commander, par l'intermédiaire du bloc hydraulique 10 et des leviers, la levée des longerons 1 et d'une charge entraînée par ces longerons 1 : le timon 16 étant alternativement levé et abaissé, son galet 19 vient, à chaque mouvement d'abaissement, presser le piston émetteur 11 qui, par l'intermédiaire d'un fluide hydraulique, pousse le piston récepteur 12 de manière à soulever la chape 4. Le palonnier 9 est ainsi éloigné de la chape 4, ce qui a un double effet : d'une part, la partie avant du châssis (tablier 2 et chape 4) est soulevée par rapport aux roues 15 du train avant 13 ; d'autre part, les deux leviers 6 pivotent autour de l'axe 5 et commandent, par l'intermédiaire des tringles 7 respectives, un mouvement de sortie des galets 3 sous les longerons 1, provoquant le soulèvement des extrémités arrière de ces longerons 1.

La description précédente s'applique aussi bien aux transpalettes manuels existants qu'à l'appareil objet de l'invention.

Dans les appareils actuels, les roues 15 du train avant 13 sont toujours montées libres en rotation autour de leur axe 14, et elles ne tournent que si l'opérateur exerce, par l'intermédiaire du timon 16, un effort de traction ou de poussée suffisant pour faire avancer ou reculer le transpalette. Selon la présente invention, le timon 16 permet d'agir en outre sur les roues 15 du train avant 13, en les entraînant en rotation directement ou par l'intermédiaire de leur axe 14, de manière à bénéficier d'une assistance au démarrage.

A cet effet, dans la forme de réalisation représentée à la figure 2, le timon 16 est prolongé, au-delà de son axe d'articulation 17, par un bras 20 à l'extrémité duquel est fixée, en un point d'attache 21, une extrémité d'une chaîne 22, telle qu'une chaîne à rouleaux, disposée sur un côté du bloc hydraulique 10. La chaîne 22 traverse le palonnier 9 par une lumière, et son extrémité inférieure s'enroule, suivant une fraction de tour, sur un pignon 23 monté coaxialement aux roues 15 du train avant 13, le point extrême de la chaîne 22 étant fixé sur le pignon 23.

Le pignon 23, voisin de l'une des roues 15 du train avant 15, est monté libre en rotation et coulissant sur l'axe 14 de ces roues 15. Un léger déplacement axial du pignon 23 permet de la rapprocher de la roue voisine 15 et de le solidariser en rotation avec cette roue, par un mécanisme à crabot. La commande de "crabotage" est faite à distance, par exemple au moyen d'une manette 24 placée sur le timon 16 vers le guidon 18 (voir figure 1), et par l'intermédiaire d'un câble ou d'une tige de transmission traversant aussi le palonnier 9. Le pignon 23 peut se désolidariser automatiquement de la roue 15 quand la traction exercée sur la chaîne 22 disparaît. Un certain état de tension permanent de cette chaîne 22 est assuré par un ressort, non représenté, agissant sur le pignon 23.

Pour utiliser le dispositif d'assistance au démarrage, lorsque cela s'avère nécessaire, l'opérateur saisit le timon 16 en position verticale, et il solidarise le pignon 23 avec la roue voisine 15 par action sur la manette 24. Puis l'opérateur tire sur le timon 16 en l'abaissant, pour l'amener à une position oblique habituelle lors d'une opération de déplacement du transpalette par traction (voir la flèche 25 de la figure 2, ainsi que la position du timon 16 indiquée en traits mixtes sur cette figure). Lors de l'abaissement du timon 16, par pivotement autour de son axe d'articulation 17, le bras 20 prolongeant le timon 16 pivote selon le même angle en se relevant, déplaçant ainsi vers le haut le point d'attache 21 de la chaîne 22.

Ainsi, la chaîne 22 subit une traction et se déroule du pignon 23, obligeant celui-ci à tourner sur une fraction de tour. Le pignon 23 entraîne alors en rotation la roue 15 du train avant 13 avec laquelle il est solidarisé, ce qui fait rouler la roue 15 sur le sol et impose un mouvement d'avance, selon la flèche 26, à l'ensemble formé par le transpalette et par la charge 27 posée sur les longerons 1. Une telle manoeuvre du timon 16 fait avancer l'axe 14 des roues 15 donc le transpalette, sur une certaine longueur L, en facilitant grandement le démarrage, ceci d'autant plus que la longueur du timon 16 représente un bras de levier beaucoup plus important que le bras 20 situé dans le prolongement de ce timon 16.

Lorsque le timon 16 est parvenu à sa position normale de traction, le pignon 23 se désolidarise de la roue voisine 15, et le transpalette, ayant bénéficié de l'assistance au démarrage, est alors "lancé" à une vitesse généralement suffisante pour être ensuite déplacé en translation de façon habituelle. Si, après cette première action, l'opérateur éprouve encore des difficultés pour déplacer le transpalette avec sa charge 27, il lui suffit de répéter la même opération, en ramenant le timon 16 à sa position verticale et en actionnant de nouveau la manette 24 avant de tirer le timon 16 en l'abaissant, l'opération pouvant être répétée autant de fois que cela s'avérera nécessaire.

La figure 3 montre une variante, dans laquelle la transmission d'effort et de mouvement, entre le timon 16 et les roues 15 du train de roulement avant 13, est assurée au moyen de deux chaînes sans fin 28, disposées symétriquement de part et d'autre du bloc hydraulique 10.

L'axe d'articulation 17 du timon 16 porte ici deux pignons d'entraînement 29, sur lesquels passent respectivement les deux chaînes sans fin 28. Chaque chaîne sans fin 28 traverse le palonnier 9 par des lumières 30, et elle s'enroule autour d'un pignon récepteur 31 monté sur l'axe 14, à proximité de l'une des roues 15 du train avant 13.

Une pédale 32, disposée par exemple au niveau de l'axe d'articulation 17 du timon 16, permet de solidariser cet axe 17 en rotation avec l'un ou l'autre des pignons 29, de manière à entraîner soit la chaîne 28 situé du côté droit, soit la chaîne 28 située du côté gauche, ce qui donne la possibilité d'actionner sélectivement l'une ou l'autre des deux roues 15, pour obtenir une assistance au démarrage soit dans le sens de la marche avant, soit dans le sens de la marche arrière :

— Pour la marche avant, la manoeuvre est analogue à celle décrite précédemment en référence à la figure 2. En tirant et abaissant le timon 16 selon la flèche 25, l'opérateur provoque, par l'intermédiaire de l'une des chaînes 28, la rotation de l'une des roues 13, dans un sens tel que cette roue 13 roule sur le sol dans le sens de la flèche 26.

— Pour la marche arrière, le timon 16 initialement en position oblique est ramené en force vers sa position verticale, ce qui provoque, par l'intermédiaire de l'autre chaîne 28, la rotation de l'autre roue 13 dans le sens inverse, de sorte que celle-ci roule sur le sol dans le sens indiqué par une flèche 33, c'est-à-dire le sens opposé au précédent.

La pédale 32 peut être remplacée par une commande de sélection au moyen d'une ou de deux manettes placées sur le timon 16. Le dispositif peut aussi être modifié de telle sorte qu'une seule et même chaîne sans fin assure la transmission pour le démarrage en marche avant et pour le démarrage en marche arrière.

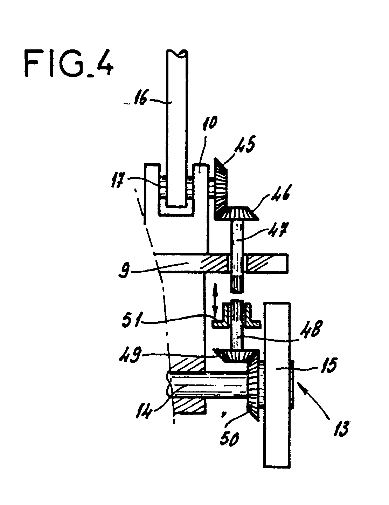

La figure 4 montre une autre forme de réalisation, dans laquelle la transmission d'effort et de mouvement, entre le timon 16 et l'une des roues 15 du train de roulement avant 13, est assurée au moyen d'engrenages. L'axe d'articulation 17 du timon 16 porte un premier pignon conique 45, en prise avec un deuxième pignon conique 46 porté par un arbre de transmission vertical 47, qui traverse le palonnier 9. Un autre arbre de transmission vertical 48, situé dans le prolongement de l'arbre 47 et sous celui-ci, porte un troisième pignon conique 49, en prise avec un quatrième et dernier pignon conique 50, qui est monté coaxialement aux roues du train avant 13, et solidaire de l'une de ces roues 15.

Les extrémités des deux arbres de transmission 47 et 48, situées en regard l'une de l'autre, comportent des cannelures et peuvent être solidarisées au moyen d'une virole d'accouplement 51, elle aussi cannelée, montée coulissante suivant son axe vertical. Le coulissement de la virole cannelée 51 est commandé au moyen d'une fourchette mobile, actionnée par une manette placée sur le timon 16 à portée de l'opérateur.

Lorsque l'accouplement des deux arbres de transmission 47 et 48 est réalisé, un pivotement du timon 16 provoque, par l'intermédiaire de ces arbres et des pignons 45, 46, 49 et 50, l'entraînement en rotation de la roue 15 solidaire du dernier de ces pignons. Le sens de déplacement du timon 16 détermine le sens de rotation de la roue 15 entraînée, donc le sens de démarrage du transpalette (marche avant ou marche arrière).

Dans une variante, la transmission par engrenages peut entraîner simultanément les deux roues 15 du train avant 13.

Les figures 5 et 6 représentent un autre dispositif d'assistance au démarrage, avec une transmission hydraulique utilisant le fluide déjà présent dans le bloc hydraulique 10.

L'axe 14 des roues 15 du train avant 13 possède ici, dans sa partie centrale, une conformation en turbine hydraulique réceptrice 34. Dans la partie inférieure 35 du bloc hydraulique 10, qui traverse le palonnier 9 et s'étend sous ce dernier, sont ménagés deux canaux 36 d'alimentation en fluide hydraulique, aboutissant à la turbine 34. Des robinets de distribution, non représentés, sont prévus sur les canaux 36, de préférence vers leurs extrémités supérieures situées dans la partie haute du bloc hydraulique 10. Les robinets permettent d'admettre un débit de fluide hydraulique réglable dans les canaux 36, et de sélectionner le sens de circulation du fluide dans ces canaux 36.

Les deux roues 15 du train avant 13 sont normalement montées libres en rotation aux extrémités de l'axe-turbine 14-34, par l'intermédiaire de roulements 37. Les deux extrémités de l'axe 14 comportent des chambres cylindriques respectives 38, recevant chacune un petit piston 39 apte à déplacer axialement un crabot cannelé 40, prévu pour venir en prise avec des cannelures complémentaires 41 formées au centre de la roue voisine 15. Un canal supplémentaire 42, ménagé dans la partie inférieure 35 du bloc hydraulique 10, débouche en regard d'une gorge annulaire 43 de l'axe-turbine 14-34. D'autres canaux 44, creusés dans l'axe 14, partent de la gorge 43 et aboutissent aux deux chambres 38 de cet axe 14. L'envoi de fluide hydraulique sous pression dans les canaux 42 et 44, donc dans les chambres 38, pousse les pistons 39 vers l'extérieur et déplace ainsi les crabots 40 de manière à les faire entrer en prise avec les cannelures 41 des roues 15 ; ces roues sont alors solidarisées en rotation avec l'axe 14. Lorsque la pression n'agit plus sur les pistons 39, ceux-ci sont ramenés dans leur position initiale, désolidarisant les roues 15 de l'axe 14, au moyen de ressorts de rappel non représentés. Sur la figure 5, on a représenté, à droite, une roue 15 solidarisée en rotation avec l'axe 14 et, à gauche, l'autre roue 15 libérée en rotation, de manière à illustrer les deux positions possibles sur une même figure.

Les robinets de distribution sont actionnés à partir de commandes placées sur le timon. Ces commandes permettent à l'opérateur de mettre en service la transmission hydraulique, de sélectionner le sens de circulation du fluide hydraulique dans les canaux 36, et de faire varier les débits de fluide dans ces canaux 36, le déplacement du fluide hydraulique étant provoqué par le mouvement du timon, agissant sur le piston émetteur. Pour l'utilisateur, le mode opératoire reste le même que celui suivi dans la forme de réalisation "mécanique" de la figure 3 : après avoir effectué la levée de la charge, l'opérateur sélectionne le sens de déplacement (marche avant ou marche arrière). Pour le démarrage en marche avant, l'opérateur tire et abaisse le timon initialement vertical, ce qui provoque une circulation du fluide hydraulique dans les canaux 36 telle que la turbine 34 entraîne l'axe 14 et les roues 15 dans le sens correspondant à la marche avant. Pour la marche arrière, l'opérateur relève le timon initialement en position oblique, en le repoussant, ce qui provoque une circulation du fluide hydraulique dans le sens inverse, de sorte que les roues 15 sont entraînées dans le sens opposé au cas précédent. En outre, la commande des robinets de distribution, réglant le débit du fluide hydraulique dans les canaux 36, permet une action contrôlée de ralentissement et de blocage de la rotation des roues 15. Selon le sens de marche, les deux canaux 34 jouent alternativement le rôle de canal d'amenée du fluid hydraulique à la turbine 34, et de retour de ce fluide.

Quels que soient ses détails de réalisation, le dispositif d'assistance précédemment décrit facilite le démarrage du transpalette, notamment dans le cas :

— d'un sol irrégulier ou en mauvais état, sur lequel le roulement est difficile,

— d'un sol glissant sur lequel l'opérateur manque d'adhérence et d'appui pour déployer un effort de traction ou de poussée,

— d'un sol légèrement incliné, nécessitant un effort supplémentaire pour déplacer le transpalette en raison de la déclivité,

— d'une charge particulièrement lourde, augmentant l'inertie à vaincre.

Le dispositif d'assistance objet de l'invention facilite aussi les manoeuvres en espace restreint, pour lesquelles l'opérateur ne peut se placer en position efficace, ainsi que les manoeuvres de rangement nécessitant une précision des mouvements du transpalette, lesquels peuvent être "dosés" à l'aide du dispositif.

Ainsi, le dispositif d'assistance selon l'invention rend d'une façon générale moins pénible le travail des manutentionnaires, et il constitue un facteur de sécurité. Ce dispositif permet donc d'envisager l'utilisation d'un transpalette manuel par une personne avant des possibilités musculaires limitées, ou non habituée à ce genre de travail.

## Revendications

1. Transpalette manuel, comprenant essentiellement un châssis avec deux longerons (1) munis de galets (3) vers l'une de leurs extrémités et reliés l'un à l'autre, à leurs autres extrémités, par un tablier transversal (2) tourné vers le haut et se terminant par une chape (4), sous laquelle est disposé un bloc hydraulique (10) prenant appui sur un palonnier (9) raccordé à deux leviers (6) articulés sur un axe horizontal (5) situé à la base du tablier (2) et reliés chacun par une tringle (7) aux galets (3) de l'un des longerons (1), un train de roulement avant (13) composé d'un axe (14) et de deux roues (15) étant prévu au-dessous du palonnier (9) et fixé à la base du bloc hydraulique (10), et un timon de manoeuvre (16) commandant la levée étant relié à la partie supérieure du bloc hydraulique (10) par l'intermédiaire d'un axe d'articulation horizontal (17), caractérisé en ce qu'il comporte un dispositif d'assistance au démarrage de ce transpalette, le dispositif d'assistance comprenant essentiellement, entre le timon (16) et l'une au moins des deux roues (15) du train de roulement avant (13) du transpalette, des moyens de liaison (20 à 23 ; 28 à 31 ; 36 à 44 ; 45 à 51) aptes à être mis en service sélectivement, pour transmettre à l'une au moins des roues (15), en traversant le palonnier (9), un effort exercé manuellement sur le timon (16) et déplaçant ce dernier, en convertissant cet effort en un couple d'entraînement en rotation de l'une au moins de ces roues (15) autour de son axe (14).

2. Transpalette manuel avec dispositif d'assistance au démarrage selon la revendication 1, caractérisé en ce que les moyens de liaison, utilisés pour transmettre un effort et un mouvement depuis le timon (16) jusqu'à l'une au moins des roues (15) du train de roulement avant (13), sont mécaniques et comprennent au moins une chaîne de transmission ou similaire (22 ; 28) dont une partie est liée au timon (16) et dont une autre partie passe sur un pignon (23 ; 31) coaxial aux deux roues (15) du train avant (13), des moyens (24) étant prévus pour solidariser temporairement en rotation le pignon (23 ; 31) avec l'une au moins des roues (15) du train avant (13).

3. Transpalette manuel avec dispositif d'assistance au démarrage selon la revendication 2, caractérisé en ce que la chaîne de transmission (22) possède une extrémité (21) fixée à un bras (20) qui prolonge le timon (16) au-delà de son axe d'articulation (17) sur le bloc hydraulique (10), tandis que l'autre extrémité de la chaîne (22) est enroulée et fixée sur le pignon (23), apte à être solidarisé temporairement en rotation avec l'une au moins des roues (15) du train avant (13).

4. Transpalette manuel avec dispositif d'assistance au démarrage selon la revendication 3, caractérisé en ce que les moyens prévus pour solidariser temporairement en rotation le pignon (23) et l'une au moins des roues (15) du train avant (13) comprennent un montage coulissant du pignon (23) sur l'axe (14) de ces roues (15), et des éléments complémentaires formés sur le pignon (23) et sur la roue voisine (15), de telle sorte qu'un déplacement axial du pignon (23) provoque l'entrée en prise desdits éléments complémentaires.

5. Transpalette manuel avec dispositif d'assistance au démarrage selon la revendication 2, caractérisé en ce que la ou chaque chaîne de transmission est une chaîne sans fin (28) passant sur un premier pignon (29) monté autour de l'axe d'articulation (17) du timon (16) sur le bloc hydraulique (10), et passant sur un deuxième pignon (31) coaxial aux roues (15) du train avant (13).

6. Transpalette manuel avec dispositif d'assistance au démarrage selon la revendication 5, caractérisé en ce qu'il comprend deux chaînes sans fin (28), disposées de part et d'autre du bloc hydraulique (10) et associées respectivement aux deux roues (15) du train avant (13), l'une des chaînes sans fin (28) étant affectée à l'entraînement d'une roue (15) dans le sens correspondant à la marche avant (flèche 26), tandis que l'autre chaîne sans fin (28) est affectée à l'entraînement d'une roue dans le sens correspondant à la marche arrière (flèche 33).

7. Transpalette manuel avec dispositif d'assistance au démarrage selon l'une quelconque des revendications 2 à 6, caractérisé en ce que la ou chaque chaîne de transmission (22 ; 28) passe au travers d'au moins une lumière (30) ménagée dans le palonnier (9), sur le côté du bloc hydraulique (10).

8. Transpalette manuel avec dispositif d'assistance au démarrage selon la revendication 1, caractérisé en ce que les moyens de liaison, utilisés pour transmettre un effort et un mouvement depuis le timon (16) jusqu'à l'une au moins des roues (15) du train de roulement avant (13), sont mécaniques et comprennent un ensemble de pignons (45, 46, 49, 50) et d'arbres de transmission (47, 48), avec un premier pignon (45) porté par l'axe d'articulation (17) du timon (16) et un dernier pignon (50) coaxial aux roues (15) du train avant (13) et solidaire en rotation de l'une au moins de ces roues (13), des moyens d'accouplement (51) étant prévus pour solidariser temporairement en rotation deux arbres de transmission (47, 48) ou un arbre et un pignon.

9. Transpalette manuel avec dispositif d'assistance au démarrage selon la revendication 1, caractérisé en ce que les moyens de liaison, utilisés pour transmettre un effort et un mouvement depuis le timon (16) jusqu'à l'une au moins des roues (15) du train de roulement avant (13) sont des moyens de transmission hydrauliques (36 à 44).

10. Transpalette manuel avec dispositif d'assistance au démarrage selon la revendication 9, caractérisé en ce que l'axe (14) portant les deux roues (15) du train avant (13) est conformé, dans sa partie centrale, en turbine hydraulique réceptrice (34), tandis que le corps (35) du bloc hydraulique (10) comporte des canaux (36) aboutissant à la turbine (34) et repartant de celle-ci, des robinets de distribution du fluide hydraulique étant prévus sur ces canaux (36).

11. Transpalette manuel avec dispositif d'assistance au démarrage selon la revendication 10, caractérisé en ce qu'il est prévu, dans le corps (35) du bloc hydraulique (10), un canal supplémentaire (42) aboutissant en regard d'une gorge annulaire (43) de l'axe (14) portant les deux roues (15) du train avant (13), cet axe (14) comportant lui-même des canaux (44) partant de ladite gorge (43) et amenant le fluide hydraulique derrière deux petits pistons (39) qui déplacent axialement des crabots (40) pour les amener en prise respectivement avec les deux roues (15).

## Patentansprüche

1. Handhubwagen, der im wesentlichen ein Chassis mit zwei Längsträgern (1) enthält, die zu einem ihrer Enden hin mit Rollen (3) versehen und an ihren anderen Enden über ein quer verlaufendes Brückenglied (2) miteinander verbunden sind, das nach oben gerichtet ist und mit einem Auflagerteil (4) endet, unterhalb von dem ein Hydraulikblock (10) angeordnet ist, der auf einem Traversenteil (9) aufliegt, das mit zwei Hebeln (6) verbunden ist, die an einer an der Basis des Brückengliedes (2) angeordneten horizontalen Achse (5) angelenkt und jeweils über ein Gestänge (7) mit den Rollen (3) eines der Längsträger (1) verbunden sind, wobei eine vordere Radanordnung (13), die sich aus einer Achse (14) und zwei Rädern (15) zusammensetzt, unterhalb des Traversenteils (9) vorgesehen und an der Basis des Hydraulikblocks (10) befestigt ist, und wobei eine die Hubbewegung steuernde Handhabungsdeichsel (16) über eine horizontale Anlenkachse (17) mit der oberen Partie des Hydraulikblocks (10) verbunden ist, dadurch gekennzeichnet, daß er eine Hilfsvorrichtung zum Starten des Hubwagens aufweist, die im wesentlichen, zwischen der Deichsel (16) und mindestens einem der beiden Räder (15) der vorderen Radanordnung (13) des Hubwagens, selektiv einsetzbare Verbindungsmittel (20 bis 23 ; 28 bis 31 ; 36 bis 44 ; 45 bis 51) enthält, um unter Durchqueren des Traversenteils (9) eine von Hand auf die Deichsel (16) ausgeübte und diese verlagernde Kraft auf mindestens eines der Räder (15) zu übertragen, wobei diese Kraft in ein Antriebsdrehmoment von mindestens einem dieser Räder (15) um seine Achse (14) umgesetzt wird.

2. Handhubwagen mit einer Hilfsstartvorrichtung nach Anspruch 1, dadurch gekennzeichnet, daß die zum Übertragen einer Kraft und einer Bewegung von der Deichsel (16) bis zu mindestens einem der Räder (15) der vorderen Radanordnung (13) verwendeten Verbindungsmittel mechanisch sind und mindestens eine Transmissionskette (22 ; 28) od.dgl. enthalten, von der eine Partie mit der Deichsel (16) verbunden ist und von der eine andere Partie über ein zu den beiden Rädern (15) der vorderen Radanordnung (13) koaxiales Treibrad (23 ; 31) geführt ist, wobei Mittel zum zeitweisen drehfesten Verbinden des Treibrades (23 ; 31) mit mindestens einem der Räder (15) der vorderen Radanordnung (13) vorgesehen sind.

3. Handhubwagen mit einer Hilfsstartvorrichtung nach Anspruch 2, dadurch gekennzeichnet, daß die Transmissionskette (22) ein an einem die Deichsel (16) über ihre Anlenkachse (17) am Hydraulikblock (10) hinaus verlängernden Arm (20) befestigtes Ende besitzt, während das andere Ende der Kette (22) auf das zeitweise drehfest mit mindestens einem der Räder (15) der vorderen Radanordnung (13) verbindbare Treibrad (23) aufgewickelt und an diesem befestigt ist.

4. Handhubwagen mit einer Hilfsstartvorrichtung nach Anspruch 3, dadurch gekennzeichnet, daß die zum zeitweisen drehfesten Verbinden des Treibrades (23) und mindestens eines der Räder (15) der vorderen Radanordnung (13) vorgesehenen Mittel eine Einrichtung zum Verschieben des Treibrades (23) auf der Achse (14) dieser Räder (15) sowie komplementär geformte Elemente am Treibrad (23) und an dem benachbarten Rad (15) enthalten, derart, daß eine axiale Verlagerung des Treibrades (23) das in Eingriff Treten der genannten komplementären Elemente bewirkt.

5. Handhubwagen mit einer Hilfsstartvorrichtung nach Anspruch 2, dadurch gekennzeichnet, daß die oder jede Transmissionskette eine Endloskette (28) ist, die um ein erstes, an der Anlenkachse (17) der Deichsel (16) am Hydraulikblock (10) sitzendes Treibrad (29) und um ein zweites, zu den Rädern (15) der vorderen Radanordnung (13) koaxiales Treibrad (31) geführt ist.

6. Handhubwagen mit einer Hilfsstartvorrichtung nach Anspruch 5, dadurch gekennzeichnet, daß sie zwei Endlosketten (28) enthält, die beiderseits des Hydraulikblocks (10) angeordnet und den beiden Rädern (15) der vorderen Radanordnung (13) zugeordnet sind, wobei eine der Endlosketten (28) dem Antreiben eines Rades (15) im einer Vorwärtsbewegung entsprechenden Sinne (Pfeil 26) zugeordnet ist, während die andere Endloskette (28) dem Antreiben eines Rades im einer Rückwärtsbewegung entsprechenden Sinne (Pfeil 33) zugeordnet ist.

7. Handhubwagen mit einer Hilfsstartvorrichtung nach einem der Ansprüche 2 bis 6, dadurch gekennzeichnet, daß die oder jede Transmissionskette (22 ; 28) mindestens eine am Traversenteil (9) an der Seite des Hydraulikblocks (10) angeordnete Öffnung (30) durchquert.

8. Handhubwagen mit einer Hilfsstartvorrichtung nach Anspruch 1, dadurch gekennzeichnet, daß die zum Übertragen einer Kraft und einer Bewegung von der Deichsel (16) bis zu mindestens einem der Räder (15) der vorderen Radanordnung (13) verwendeten Verbindungsmittel mechanisch sind und eine Anordnung von Treibrädern (45, 46, 49, 50) und von Transmissionswellen (47, 48) enthalten, wobei ein erstes Treibrad (45) von der Anlenkachse (17) der Deichsel (16) getragen wird und ein letztes Treibrad (50) koaxial zu den Rädern (15) der vorderen Radanordnung (13) sowie drehfest mit mindestens einem dieser Räder (13) ist, und wobei KUpplungsmittel (51) zum zeitweisen drehfesten Verbinden von zwei Transmissionswellen (47, 48) oder von einer Welle und einem Treibrad vorgesehen sind.

9. Handhubwagen mit einer Hilfsstartvorrichtung nach Anspruch 1, dadurch gekennzeichnet, daß die zum Übertragen einer Kraft und einer Bewegung von der Deichsel (16) bis zu mindestens einem der Räder (15) der vorderen Radanordnung (13) verwendeten Verbindungsmittel hydraulische Transmissionsmittel (36 bis 44) sind.

10. Handhubwagen mit einer Hilfsstartvorrichtung nach Anspruch 9, dadurch gekennzeichnet, daß die die beiden Räder (15) der vorderen Radanordnung (13) tragende Achse (14) in ihrem zentralen Bereich als hydraulisch arbeitende Turbine (34) ausgebildet ist, während der Körper (35) des Hydraulikblocks (10) zu der Turbine (34) hin und von dieser weg führende Kanäle enthält, wobei in den Kanälen (36) Ventile zum Verteilen des hydraulischen Fluids vorgesehen sind.

11. Handhubwagen mit einer Hilfsstartvorrichtung nach Anspruch 10, dadurch gekennzeichnet, daß in dem Körper (35) des Hydraulikblocks (10) ein zusätzlicher Kanal (42) vorgesehen ist, der zu einer Ringnut (43) der die beiden Räder (15) der vorderen Radanordnung (13) tragenden Achse (14) führt, wobei diese Achse (14) ihrerseits Kanäle (44) enthält, die von der genannten Nut (43) ausgehen und das hydraulische Fluid hinter zwei kleine Kolben (39) führen, die Kupplungsstücke (40) axial verlagern, um sie mit dem jeweiligen der Räder (15) in Eingriff zu bringen.

## Claims

1. A manual stillage truck, essentially comprising a chassis with two longitudinal girders (1) supplied with rollers (3) towards one of their ends and connected together at their other ends by a transverse superstructure (2) turning in an upward direction and terminating in a coping (4) below which a hydraulic block (10) is arranged, resting on a swing-plate (9) linked to two levers (6) articulated on a horizontal axle (5) situated at the base of the superstructure (2) and each connected by a rod (7) to the rollers (3) of one of the longitudinal girders (1), a front means of movement (13) composed of an axle (14) and two wheels (15) being provided below the swing-plate (9) and fixed to the base of the hydraulic block (10), and a steering shaft (16) that controls the lifting being connected to the upper part of the hydraulic block (10) through the intermediary of a horizontal articulation axle (17), *characterized in that* it includes an appliance to assist in starting the movement of this stillage truck, the assisting appliance essentially comprising, between shaft (16) and at least one of the two wheels (15) of the front means of movement (13) of the stillage truck, connecting means (20 to 23 ; 28 to 31 ; 36 to 44 ; 45 to 51) capable of being brought into service selectively, to transmit to at least one of the wheels (15), by passing through the swing-plate (9), a force manually exerted on the steering shaft (16) and displacing the latter, by converting this force into a couple causing rotation around its axle (14) of this one at least of these wheels (15).

2. A manual stillage truck with an appliance to assist in starting movement according to Claim 1, *characterized in that* the connecting means used to transmit a force and a movement from shaft (16) to at least one of the wheels (15) of the front means of movement (13) are mechanical and comprise at least one transmission chain or the like (22 ; 28) one part of which is linked to the shaft (16) and another part of which passes around a chain wheel (23 ; 31) coaxial with the two wheels (15) of the front means of movement (13), means (24) being provided to lock chain wheel (23 ; 31) temporarily in rotation with this one at least of the wheels (15) of the front means of movement (13).

3. A manual stillage truck with an appliance to assist in starting movement according to Claim 2, *characterized in that* the transmission chain (22) possesses an end (21) fixed to an arm (20) that extends the shaft (16) beyond its axle of articulation (17) to the hydraulic block (10), whilst the other end of the chain (22) is wrapped around and fixed to the chain wheel (23) that is capable of being temporarily locked in rotation to at least one of the wheels (15) of the front means of movement (13).

4. A manual stillage truck with an appliance to assist in starting movement according to Claim 3, *characterized in that* the means provided to lock chain wheel (23) and at least one of the wheels (15) of the front means of movement (13) temporarily in rotation comprise a sliding motion of the chain wheel (23) on the axle (14) of these wheels (15) and complementary units formed on the chain wheel (23) and the adjacent wheel (15), in such a way that axial displacement of the chain wheel (23) brings about intermeshing of the said complementary units.

5. A manual stillage truck with an appliance to assist in starting movement according to Claim 2, *characterized in that* the or each transmission chain is an endless chain (28) passing over a first chain wheel (29) mounted around the axle of articulation (17) of shaft (16) to the hydraulic block (10) and passing over a second chain wheel (31) coaxial with the wheels (15) of the front means of movement (13).

6. A manual stillage truck with an appliance to assist in starting movement according to Claim 5, *characterized in that* it comprises two endless chains (28) located on either side of the hydraulic block (10) and associated respectively with two wheels (15) of the front means of movement (13), one of the endless chains (28) being assigned to driving a wheel (15) in the direction corresponding to motion forward (arrow 26), whilst the other endless chain (28) is assigned to driving a wheel in the direction corresponding to motion backward (arrow 33).

7. A manual stillage truck with an appliance to assist in starting movement according to any of Claims 2 to 6, *characterized in that* the or each transmission chain (22 ; 28) passes through at least one opening (30) provided in the swing-plate (9), at the side of the hydraulic block (10).

8. A manual stillage truck with an appliance to assist in starting movement according to Claim 1, *characterized in that* the connecting means used to transmit a force and a movement from shaft (16) to at least one of the wheels (15) of the front means of movement (13) are mechanical and comprise an assembly of gear wheels (45, 46, 49, 50) and transmission shafts (47, 48), with a first gear wheel (45) carried by the axle of articulation (17) of shaft (16) and a last gear wheel (50) coaxial with the wheels (15) of the front means of movement (13) and locked in rotation to at least one of these wheels (13), coupling means (51) being provided to lock two transmission shafts (47, 48) or a shaft and a gear wheel temporarily together in rotation.

9. A manual stillage truck with an appliance to assist in starting movement according to Claim 1, *characterized in that* the connecting means used to transmit a force and a movement from shaft (16) to at least one of the wheels (15) of the front means of movement (13) are hydraulic means of transmission (36 to 44).

10. A manual stillage truck with an appliance to assist in starting movement according to Claim 9, *characterized in that* the axle (14) bearing the two wheels (15) of the front means of movement (13) is formed in its central portion into a receiving hydraulic turbine (34), whilst the body (35) of the hydraulic block (10) contains channels (36) ending at the turbine (34) and starting away from it, distribution valves for the hydraulic fluid being provided in these channels (36).

11. A manual stillage truck with an appliance to assist in starting movement according to Claim 10, *characterized in that* a supplementary channel (42) is provided in the body (35) of hydraulic block (10), ending opposite to an annular groove (43) in the axle (14) carrying the two wheels (15) of the front means of movement (13), this axle (14) itself comprising channels (14) leading away from the said groove (43) and conveying the hydraulic fluid behind two small pistons (33) that axially displace spur gear-wheels (40) to bring them into gear with the two wheels (15) respectively.

11

EP 0 287 483 B1

FIG.1

FIG.2

12

FIG_3

FIG.5

FIG.6

13

# FIG.4